# EUROPÄISCHE PATENTSCHRIFT

(11) **EP 4 035 983 B1**
(45) Veröffentlichungstag und Bekanntmachung des Hinweises auf die Patenterteilung: **24.01.2024**
(21) Anmeldenummer: 22154219.4
(22) Anmeldetag: 31.01.2022
(51) Int. Cl.: B62K 27/00, B62K 27/02

(54) **FAHRRADANHÄNGER MIT VARIABLEM TRANSPORTVOLUMEN**
BICYCLE TRAILER WITH VARIABLE TRANSPORT VOLUME
REMORQUE DE BICYCLETTE À VOLUME DE TRANSPORT VARIABLE

(30) Priorität: 02.02.2021 DE 102021102362
(43) Veröffentlichungstag der Anmeldung: 03.08.2022
(73) Patentinhaber: Hammer, Uwe, 83026 Rosenheim (DE)
(72) Erfinder: Hammer, Uwe, 83026 Rosenheim (DE)
(74) Vertreter: DREISS Patentanwälte PartG mbB

(56) Entgegenhaltungen:
- DE-U1-202004 017 480
- DE-U1-202005 010 237

## Beschreibung

Die Reduktion des C0₂-Ausstoßes insbesondere im Straßenverkehr stellt eine der größten Herausforderungen der heutigen Zeit da. Diese Reduktion lässt sich zum einen durch neue Antriebskonzepte für Kraftfahrzeuge, wie beispielsweise elektrische Antriebe oder Brennstoffzellensysteme erreichen. Ein weiterer Ansatz ist die Reduzierung der mit Kraftfahrzeugen zurückgelegte Stecke indem andere Verkehrsmittel zum Einsatz kommen. Dies wären beispielsweise öffentliche Verkehrsmittel wie Bahn oder Bus. Ebenso stellt das Fahrrad, insbesondere bei kürzeren Stecken, eine Alternative zu Kraftfahrzeugen dar. Problematisch ist jedoch, dass mit Fahrräder nur eine geringe Last sowohl in Form von Gewicht als auch in Form von Volumen befördert werden kann, was den Einsatzbereich des Fahrrades erheblich einschränkt.

Zur Erhöhung des Transportvolumens kommen häufig Fahrradanhänger zum Einsatz, welche in der Regel über zwei Räder verfügen und mit dem Fahrrad so verbunden werden, dass der Anhänger mit dem Fahrrad gezogen werden kann. Insbesondere durch das Aufkommen von e-Bikes wird der Transport von Gütern mit Hilfe eines Fahrradanhängers erleichtert, da auch größere Lasten ohne überhöhten Kraftaufwand transportiert werden können. Dokument DE202006008175U zeigt eine Fahrradanhänger entsprechend der Präambel des Anspruchs 1.

Der Erfindung liegt die Aufgabe zu Grunde, einen Fahrradanhänger bereitzustellen, dessen Ladevolumen variabel ist und ohne Werkzeug, selbst mit Handschuhen einfach und rasch an den aktuellen Bedarf anpassbar ist.

Diese Aufgabe wird erfindungsgemäß gelöst durch einen Fahrradanhänger mit einem Gelenk zur drehbaren Lagerung eines Stirnbügels oder einer Bordwand des Fahrradanhängers, wobei das Gelenk einen Verbinder mit zwei zueinander beabstandeten Schenkeln, eine Lagerhülse und eine Fixiervorrichtung umfasst, wobei die Fixiervorrichtung die formschlüssige Arretierung des Stirnbügels relativ zu dem Verbinder in mindestens zwei Positionen ermöglicht, wobei der Stirnbügel mittels der Lagerhülse drehbar an dem Verbinder gelagert ist, und wobei eine lichte Weite zwischen den Schenkeln größer ist als ein Durchmesser des Stirnbügels, so dass der Stirnbügel auf der Lagerhülse zwischen den Schenkeln verschiebbar ist.

Dadurch kann der Stirnbügel/die Ladebordwand bei Bedarf auf der Lagerhülse verschoben werden, so dass ein Formschluss zwischen dem Stirnbügel und dem Verbinder aufgehoben wird. Dann kann der Stirnbügel mit der Lagerhülse als Drehachse in eine andere Position verschwenkt werden. Anschließend kann der Stirnbügel in dieser Position durch Verschieben des Stirnbügels in entgegengesetzter Richtung wieder formschlüssig arretiert werden.

Weil der Stirnbügel gleichzeitig das Griffelement für die Hand einer Bedienerin oder eines Bedieners ist, erfordert das Lösen bzw. Einrücken des Formschlusses zwischen Stirnbügel und Verbinder kein Werkzeug. Dieser Vorgang kann auch bei unwirtlichen Umgebungsbedingungen (Niedrige Außentemperatur, Regen und/oder Dunkelheit) und mit Handschuhen problemlos ausgeführt werden. Das Positionieren des Stirnbügels in einer anderen Position dauert nur wenige Sekunden. Deshalb macht der Nutzer des Fahrradanhängers häufig davon Gebrauch und die mit dem Fahrradanhänger zu transportierende Last wird optimal in dem Fahrradanhänger aufgenommen. Außerdem kann durch das Hochklappen des Stirnbügels die Länge des Anhängers verkürzt werden, so dass der Anhänger nur so lang wie nötig ist, Das ist ein Vorteil nicht nur während des Fahrbetriebs, sondern auch beim Abstellen.

Der Verbinder bzw. das Gelenk sind fertigungstechnisch einfach herzustellen. Der Verbinder an sich kann aus einem durch Stanzen oder Laserschneiden hergestellten Blech durch zweifaches Abkanten hergestellt werden. Durch eine geeignete Materialwahl (hochfestes Aluminium, Stahl, Edelstahl, ...) in Verbindung mit einer geeigneten Dimensionierung ist das Gelenk sehr robust, so dass es den harten Alltagseinsatz über viele Jahre klaglos übersteht.

Die formschlüssige Verbindung bzw. Arretierung des Stirnbügels relativ zu dem Verbinder kann dadurch erfolgen, dass an dem Verbinder mehrere Stifte fest angeordnet sind, wobei diese Stifte in den Raum zwischen den Schenkeln ragen, dass in dem Stirnbügel eine Bohrung vorhanden ist, und dass die formschlüssige Arretierung des Stirnbügels hergestellt wird, indem einer der Stifte in die Bohrung des Stirnbügels eintaucht, wenn der Stirnbügel auf der Lagerhülse verschoben wird.

Es ist auch möglich, dass in dem Verbinder mehrere Bohrungen ausgebildet sind und in dem Stirnbügel eine Hülse vorhanden ist, deren eines Ende über den Außendurchmesser des Stirnbügels hinausragt, und dass die formschlüssige Arretierung des Stirnbügels hergestellt wird, indem das über den Stirnbügel hinausragende Ende der Hülse in eine der Bohrungen des Verbinders eintaucht.

Man kann sagen, dass diese beiden Ausgestaltungen gewissermaßen eine Umkehr bzw. ein Vertauschen der Anordnung von Bohrung und Stift bedeuten. Beide Ausführungen sind konstruktiv sehr einfach beherrschbar. Sie lassen sich fertigungstechnisch gut realisieren und sind sehr robust.

Um ein ungewolltes Lösen der formschlüssigen Verbindung zu verhindern, sind in dem Gelenk Federmittel vorgesehen, deren Federkraft den Stirnbügel auf der Lagerhülse in Richtung des Schenkels drückt, an dem die Stifte befestigt sind oder in dem die Bohrungen ausgebildet sind. Diese Federmittel können auf verschiedenste Arten und Weisen ausgebildet sein. So ist es beispielsweise möglich, dass die Federmittel eine Druckfeder, eine Federführung und eine Gleithülse umfassen, und dass sich die Druckfeder mit einem Ende gegen die Federführung und mit dem anderen Ende gegen die Gleithülse abstützt. Dabei ist es bevorzugt, wenn die Federführung in dem Stirnbügel aufgenommen ist und sich die Gleithülse gegen einen Schenkel des Verbinders abstützt. Dabei handelt es sich um den Schenkel des Verbinders, der dem Schenkel mit den Stiften oder den Bohrungen gegenüberliegend angeordnet ist.

Alternativ ist es auch möglich, dass sich die Druckfeder mit einem Ende gegen die Hülse und mit dem anderen Ende gegen die Gleithülse abstützt.

Schließlich ist es auch möglich, dass auf der Lagerhülse eine Druckfeder angeordnet ist.

Es ist selbstverständlich auch möglich, mehrere der genannten Federmittel miteinander zu kombinieren, so dass die Federkraft, welche dafür sorgt, dass der Formschluss zwischen Stirnbügel und Verbinder auf nicht ungewollter Weise aufgehoben wird, in weiten Grenzen entsprechend den Anforderungen des konkreten Anwendungsfalls eingestellt werden kann. Wenn mehrere Federmittel miteinander kombiniert werden, dann ist auch beim Versagen einer der Druckfedern die Funktion noch gewährleistet. Das heißt, der Fahrradanhänger bleibt funktionsfähig, bis die gebrochene Feder bei nächster Gelegenheit ausgetauscht wird.

Die eingangs genannte Aufgabe wird auch bei einem Fahrradanhänger, umfassend zwei Längsträger und einen Boden, zwei Räder und eine Deichsel, dadurch gelöst, dass mindestens ein Stirnbügel an den Längsträgern mittels zweier Gelenke drehbar gelagert ist, und dass mindestens eines der Gelenke ein Gelenk nach einem der Ansprüche 1 bis 8 ist.

Im Regelfall wird man einen Stirnbügel mit zwei baugleichen erfindungsgemäßen Gelenken an dem Fahrradanhänger anbringen. Das erhöht die Belastbarkeit der Fixierung, bietet eine Redundanz und reduziert die Zahl der Baugruppen.

Wenn nur eines der Gelenke, die einen Stirnbügel drehbar an den Längsträgern lagern, ein erfindungsgemäßes Gelenk ist, kann das andere Gelenk als ganz normales Gelenk ohne Fixiereinrichtung ausgeführt sein. Allerdings muss dieses Gelenk auch einen axialen Freiheitsgrad haben, so dass der Stirnbügel in axialer Richtung, d.h. parallel zur Drehachse der Lagerhülse, verschiebbar ist.

Dies ist eine besonders kostengünstige Lösung. Aus Gründen der Reduzierung der Zahl der Varianz der Baugruppen und der redundanten Sicherheit ist es jedoch bevorzugt, wenn an beiden Längsträgern des Fahrradanhängers erfindungsgemäße Gelenke angeordnet sind, und jeweils zwei solcher Gelenke einen Stirnbügel lagern und in einer von der Nutzerin bzw. dem Nutzer des Fahrradanhängers gewünschten Position formschlüssig arretieren.

In der Regel wird man auch sowohl am vorderen Ende als auch am hinteren Ende der Ladefläche des Fahrradanhängers einen erfindungsgemäß arretierbaren Stirnbügel oder eine arretierbare Bordwand vorsehen. Damit wird verhindert, dass die Ladung des Fahrradanhängers nach vorne oder nach hinten von der Ladefläche herunterrutschen kann. Gleichzeitig wird auch das Sichern der Ladung auf der Ladefläche des Fahrradanhängers vereinfacht.

Der Stirnbügel kann als U-förmiger Rohrbogen mit einem kreisrunden Querschnitt oder auch einem quadratischen Querschnitt ausgebildet sein. Es ist aber auch möglich, eine Bordwand an dem Stirnbügel anzubringen, so dass kleine Gegenstände nicht unter dem Rohrbügel hindurch von der Ladefläche rutschen können.

Um die Variabilität des Fahrradanhängers weiter zu erhöhen, kann es erfindungsgemäß vorgesehen sein, dass die Deichsel in zwei oder mehr verschiedenen Positionen an dem eigentlichen Fahrradanhänger befestigt werden kann. Wenn kurze Ladungen mit dem Fahrradanhänger transportiert werden sollen, wird die Deichsel so montiert, dass sie eine kurze wirksame Länge hat.

Dadurch verringert sich die Länge des Fahrradanhängers und das Fahren in Innstadtbereichen oder auf Radwegen wird erleichtert. Wenn lange Ladungsstücke transportiert werden sollen, wird die Deichsel entsprechend dem Bedarf aus dem Anhänger herausgezogen.

Kurz gesagt: Ein Vorteil des erfindungsgemäßen Anhängers für Fahrräder ist dessen Variierbarkeit der Abmessungen; insbesondere in der Länge, sodass zum Transport von Lasten mit geringeren Abmessungen der Anhänger verkürzt werden kann, so dass die Agilität beim Fahren bewahrt bleibt. Zum Transport von Lasten mit größeren Abmessungen kann der Anhänger verlängert werden um einen sicheren Transport zu gewährleisten.

Weitere Vorteile und vorteilhafte Ausgestaltungen der Erfindung sind den Figuren und deren Beschreibung entnehmbar.

### Zeichnung:

Es zeigen:
Figur 1 eine isometrische Darstellung des erfindungsgemäßen Anhängers für Fahrräder in der ausgeklappten, langen Verwendungsart.
Figur 2 eine isometrische Darstellung des erfindungsgemäßen Anhängers für Fahrräder in der eingeklappten, kurzen Verwendungsart.
Figur 3 eine isometrische Darstellung des Grundrahmens 13 des erfindungsgemäßen Anhängers für Fahrräder.
Figur 4 den Verbinder 5 des erfindungsgemäßen Anhängers für Fahrräder in unterschiedlichen Ansichten.
Figur 5 den Längsträger 2 des erfindungsgemäßen Anhängers für Fahrräder in unterschiedlichen Ansichten.
Figur 6 das Bodenblech 3 des erfindungsgemäßen Anhängers für Fahrräder in unterschiedlichen Ansichten.
Figur 7 den Klappsplint 27 des erfindungsgemäßen Anhängers für Fahrräder in einer isometrischen Darstellung.
Figur 8 den Seitenbügel 6 des erfindungsgemäßen Anhängers für Fahrräder in einer isometrischen Darstellung.
Figur 9 den Stirnbügel 5 des erfindungsgemäßen Anhängers für Fahrräder in unterschiedlichen Ansichten.
Figur 10 eine erste Ausführungsvariante einer Fixiervorrichtung des erfindungsgemäßen Anhängers für Fahrräder in unterschiedlichen Ansichten.
Figur 11 einen Schnitt entlang der Schnittlinie A-A in

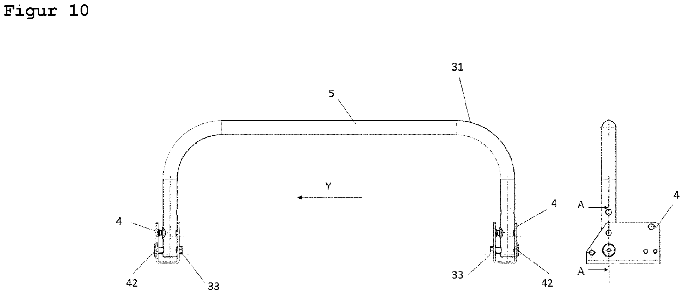

Figur 10 des erfindungsgemäßen Anhängers für Fahrräder.

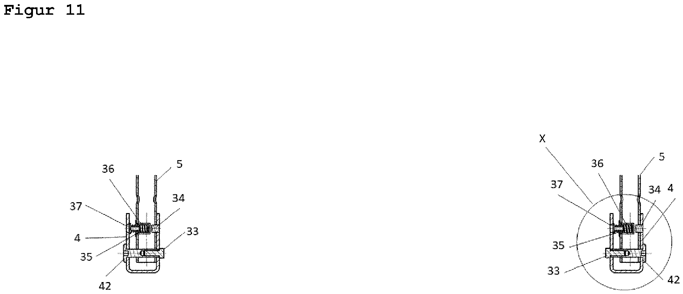

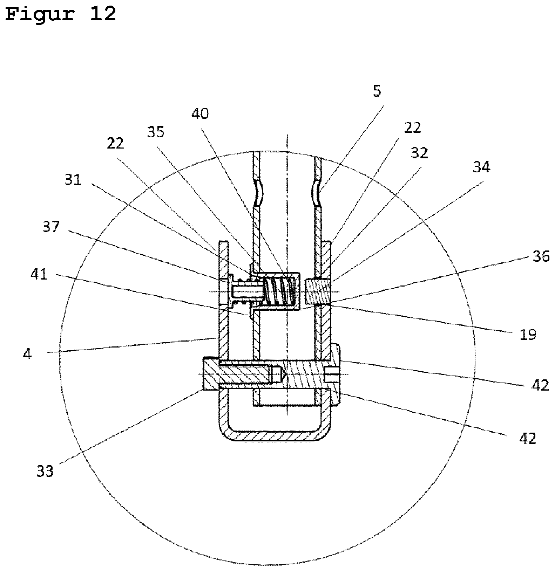

Figur 12 das Detail X in Figur 11.

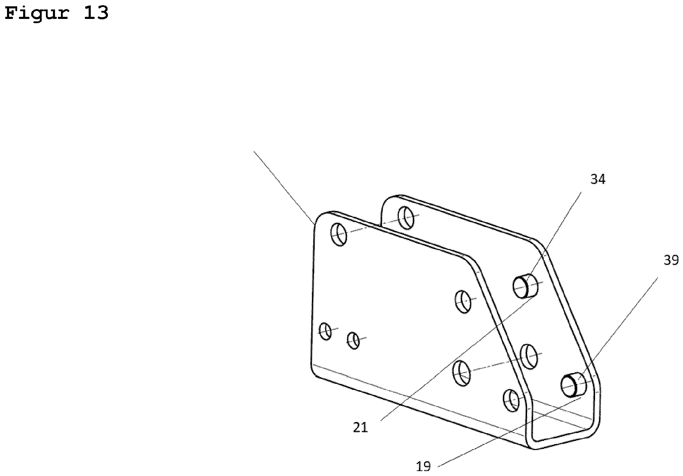

Figur 13 den Verbinder 5 mit den Stiften 34 und 39 des erfindungsgemäßen Anhängers für Fahrräder in unterschiedlichen Ansichten.

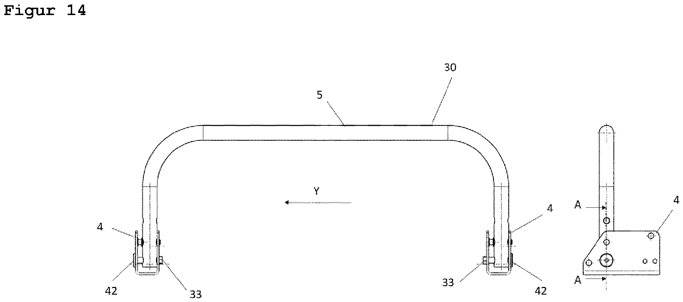

Figur 14 eine zweite Ausführungsvariante einer Fixiervorrichtung des erfindungsgemäßen Anhängers für Fahrräder in unterschiedlichen Ansichten.

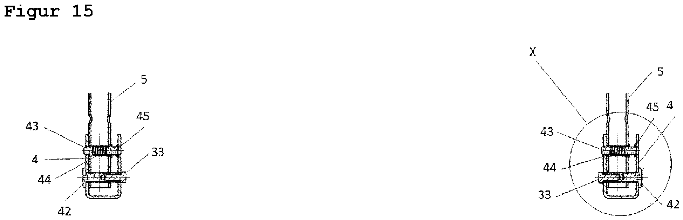

Figur 15 einen Schnitt entlang der Schnittlinie A-A in

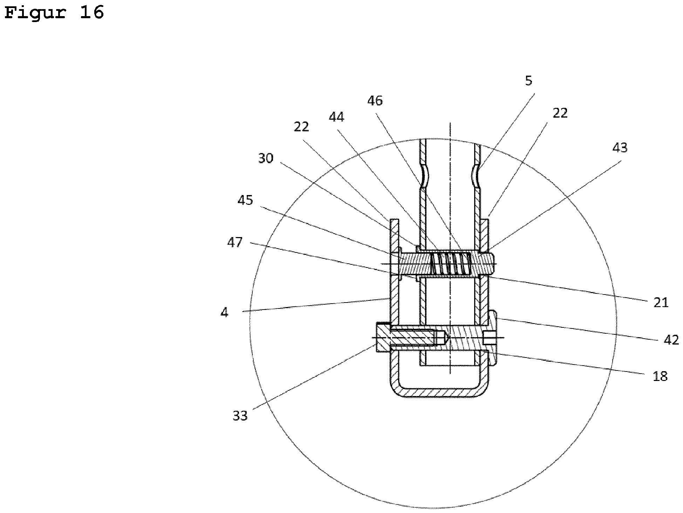

Figur 16 des erfindungsgemäßen Anhängers für Fahrräder.
Figur 16 das Detail X aus Figur 15.

### Beschreibung des Ausführungsbeispiels

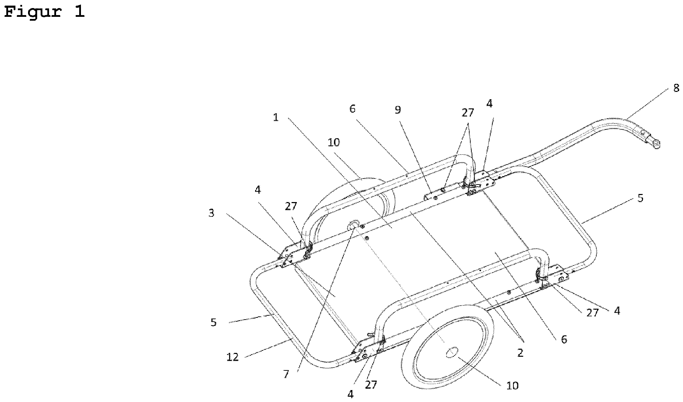

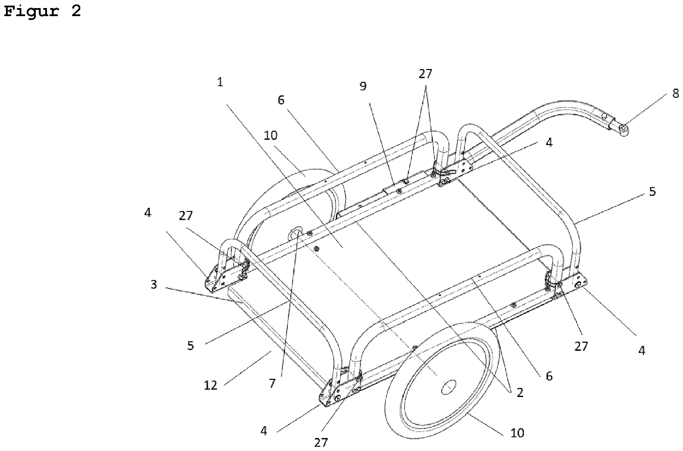

Die Figuren 1 und 2 zeigen den erfindungsgemäßen Anhänger einmal in der ausgeklappten, langen Verwendungsart (Figur 1) und einmal in der eingeklappten, kurzen Verwendungsart (Figur 2).

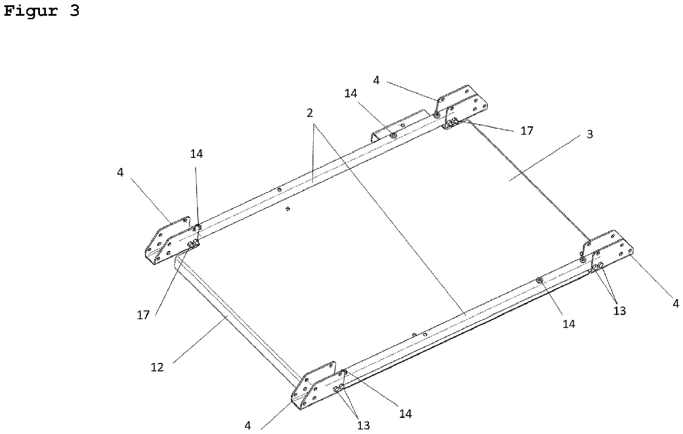

Hierbei besteht der erfindungsgemäße Anhänger für Fahrräder 1 aus dem in Figur 3 dargestellten Grundträger 12 welcher seinerseits aus den beiden Längsträger 2, dem Bodenblech 3, sowie den Verbinder 4. In einer besonders vorteilhaften Ausführungsvariante ist die Grundform der Verbinder 4 so gestaltet, dass eine Fertigung als Stanz-Biegeteil möglich ist. Auch das Laserschneiden anstelle des Stanzens ist möglich.

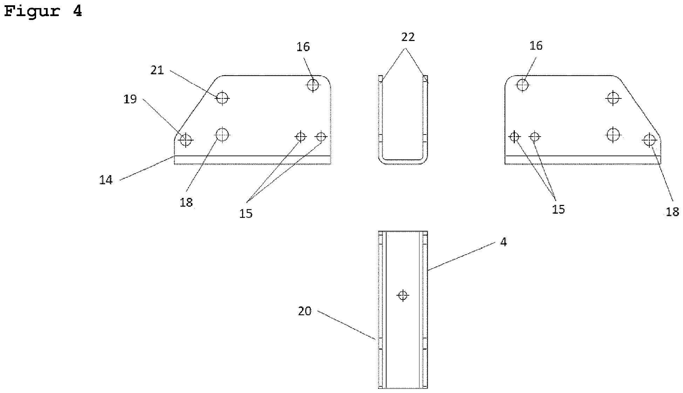

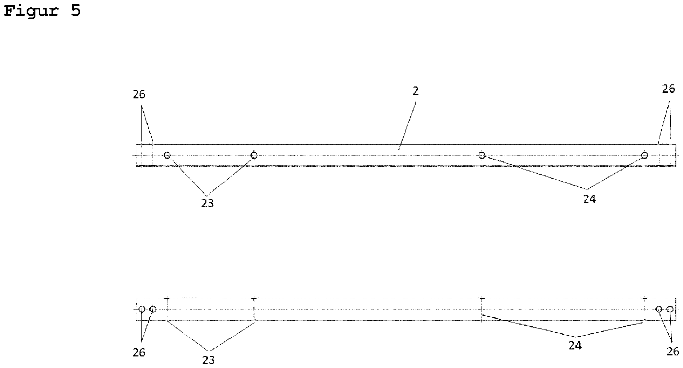

Die Verbindung der Längsträger 2, welche hier beispielsweise in zylindrischer Form (Rohr) dargestellt sind, mit den Verbinder 4 erfolgt beispielsweise mit Hilfe der mindestens einen Schraube 13, welche durch die Bohrungen 15 des in Figur 4 dargestellten Verbinders 4, sowie durch die Bohrungen 26 des in Figur 5 dargestellten Längsträgers 2 gefügt werden. Die Schrauben 13 werden mit den Muttern 17 verschraubt. Anstelle der Mutter 17 kann der Verbinder auch mit einem entsprechenden Gewinde versehen werden.

Die Verbindung zwischen den Verbindern 4 und den Längsträgern 2 kann beispielsweise auch durch Vernieten oder einer anderen geeigneten Weise erfolgen. Die Längsträger 2 sind derart angeordnet, dass sie zwischen den beiden Schenkeln 22 des U-förmigen Verbinders 4 liegen.

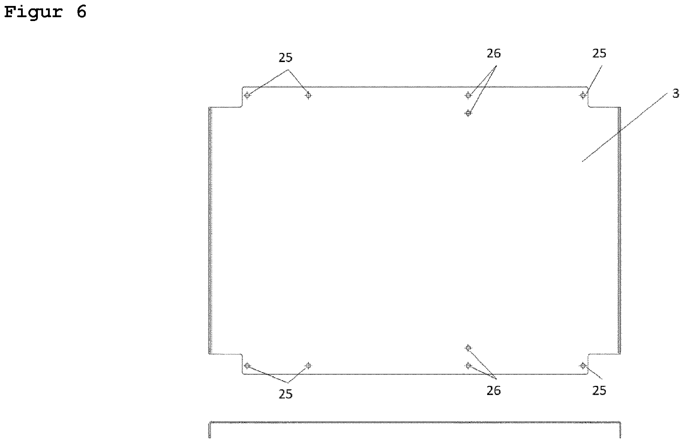

Die Verbindung des Bodenblechs 3, welches in einer ersten Ausführungsvariante, wie in Figur 5 dargestellt, beispielsweise als stirnseitig gebogenes Blech ausgeführt ist, mit den Längsträger 2 erfolgt beispielsweise mit Hilfe der Schrauben 14, welche durch die Bohrungen 23 und 24 des Längsträgers 2, sowie durch die Bohrungen 25 des in Figur 6 dargestellten Bodenblechs 3 gefügt werden, wobei die Schrauben 14 mit einer nicht dargestellten Mutter verschraubt werden. Die Verbindung zwischen dem Längsträger 2 und dem Bodenblech 3 kann beispielsweise auch durch Vernieten oder auf einer anderen geeigneten Weise erfolgen.

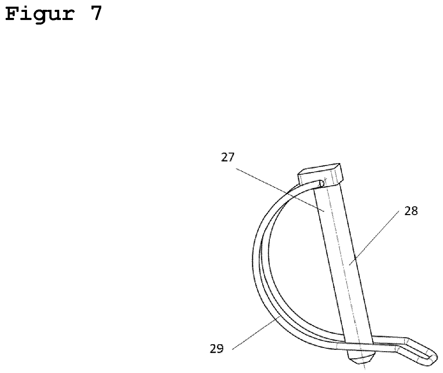

Die Verbindung der in Figur 1 und 2 dargestellten Seitenbügel 6, welche hier beispielsweise mit kreisförmigen Querschnitt dargestellt sind, mit den Verbindern 4 erfolgt mit Hilfe eines in Figur 7 dargestellten Klappsplints 27, welche aus dem Stift 28 und der Bügelfeder 29 bestehen, wobei die Bügelfeder 29 in geeigneter Weise derart mit dem Stift 28 verbunden ist, dass die Bügelfeder 29 bezüglich dem Stift 28 verdrehbar ist, und dass die Bügelfeder 29 die in Figur 7 dargestellte Position bezüglich des Stifts 28 einnimmt, wenn keine verdrehende Kraft auf die Bügelfeder 29 ausgeübt wird. Klappsplinte im Allgemeinen sind Stand der Technik und werden daher hier nicht näher beschrieben.

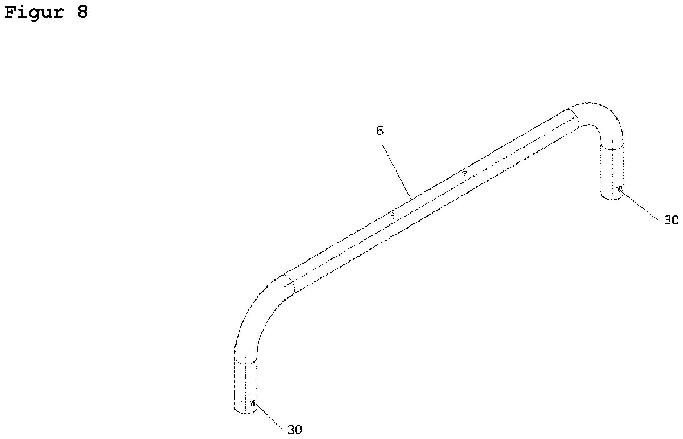

Zur Verbindung der Seitenbügel 6 mit den Verbindern 4 wird die Bügelfeder 29 derart verdreht, dass der Stift 28 des Klappsplints 28 durch die Bohrung 17 der Träger 4 sowie durch die in Figur 8 dargestellte Bohrung 30 der Seitenbügel 6 geführt wird, wobei die Seitenbügel 6 derart angeordnet sind, dass sie zwischen den beiden Schenkeln 22 der Verbinder 4 liegen. Die Verwendung der Klappsplinte 27 dient in erster Linie zur schnellen Montage und Demontage der Seitenbügel, wobei die Verbindung der Seitenbügel 6 mit den Verbindern 4 beispielsweise auch mittels Verschrauben oder Vernieten erfolgen kann.

Weiterhin verfügt der erfindungsgemäße Anhänger für Fahrräder 1 über die in Figuren 1 und 2 dargestellte Deichsel 8 welche in geeigneter Weise lösbar und in mehreren Positionen mit dem Grundträger 12 verbunden werden kann. Die Deichsel 8 verbindet den erfindungsgemäßen Anhänger 1 mit dem Zugfahrzeug insbesondere dem Fahrrad.

Ebenso verfügt der erfindungsgemäße Anhänger für Fahrräder 1 über die in Figur 1 und 2 dargestellte Räder 10 welche in geeigneter Weise derart mit der Achse 7 verbunden sind, dass die Räder 10 drehbar bezüglich der Achse 7 gelagert sind. Die Achse 7 ist in geeigneter Weise mit dem Grundträger 12 verbunden.

Um die Stirnbügel 5 in zwei oder mehr Positionen arretieren zu können, ist in den Verbindern 4 eine erfindungsgemäße Fixiervorrichtung 31 integriert. Anhand der Figuren 10 bis 13 wird eine erste Ausführungsform und anhand der Figuren 14 bis 16 wird eine zweite Ausführungsform der erfindungsgemäßen Fixiervorrichtung 31 erläutert.

### Variante 1:

Wie in Figur 10 erkennbar, sind die Stirnbügel 5 so mit den Verbindern 4 verbunden, dass diese bezüglich der Verbinder 4 verdrehbar sind. Anders ausgedrückt: Die Stirnbügel 5 sind gelenkig an den Verbindern gelagert. Die Drehachse dieses Gelenks wird bei diesem Ausführungsbeispiel durch die Lagerhülse 42 gebildet.

Um die Stirnbügel 5 in verschiedenen Positionen (siehe Figuren 1 und 2) arretieren zu können, ist in den Verbindern 4 eine der im Folgenden erläuterten Fixiervorrichtungen 31 vorgesehen. Ein Verdrehen/Umklappen der Stirnbügel 5 zwischen den in den Figuren 1 und 2 dargestellten Positionen kann nur erfolgen, wenn die Fixierung gelöst wird.

Figur 10 zeigt eine erste Ausführungsvariante der Fixiervorrichtung 31 deren Funktion darin besteht, die Stirnbügel 5 in den in Figur 1 und 2 dargestellten Endpositionen zu fixieren.

Der Stirnbügel 5 wird über die Lagerhülse 42 mit den Verbindern 4 derart verbunden, dass der Stirnbügel 5 eine Drehbewegung um die Längsachse der Lagerhülse 42 durchführen kann, wobei die Lagerhülse 42 durch die Bohrung 18 der Verbinder 4 und durch die Bohrung 38 der Stirnbügel 5 ragt. Sie kann beispielsweise mit der Schraube 33 gesichert werden (Figur 11). Die Sicherung der Lagerhülse 42 kann auch mit Hilfe eines Sicherungsrings erfolgen. Ebenso ist eine drehbare Verbindung der Stirnbügel 5 mit den Verbindern 4 in einer anderen geeigneten Weise beispielsweise durch Vernieten denkbar.

Die Stirnbügel 5 sind derart angeordnet, dass sie zwischen den beiden Schenkeln 22 des Verbinders 4 liegen. Anhand der Figuren 11 und 12 wird deutlich, dass die lichte Weite zwischen den Schenkeln 22 größer ist als der Außendurchmesser der Stirnbügel 5. Die Figuren 11 und 12 zeigen die Fixiervorrichtung 31 in der "aktiven" Position, d. g. ein Drehen des Stirnbügels 5 ist nicht möglich.

In der "aktiven" Position besteht ein Formschluss zwischen dem Verbinder 4 und dem Stirnbügel 5. Bei dem ersten Ausführungsbeispiel sind in einem Schenkel des Verbinders 4 zwei Stifte 34, 39 fest angebracht; für jede Position ein Stift. Sie bewirken zusammen mit einer Bohrung 32 in dem Stirnbügel den Formschluss bei der ersten Ausführungsform.

Wie sich aus der Figur 10 ergibt, sind die Verbinder 4 "gleichgerichtet" angeordnet. Dadurch ist es ist möglich, den Stirnbügel 5 gegen die Kraft der Druckfedern 35 in Richtung des Pfeils Y relativ zu dem Verbinder zu bewegen. Dadurch bewegt sich der Stift 34 aus der Bohrung 32 des Stirnbügels 5 und der Formschluss ist aufgehoben. Dann kann der Stirnbügel 5 verschwenkt werden.

Figur 13 zeigt den Verbinder 4 mit den Stiften 34 und 39, wobei der Stift 34 zur Fixierung der Stirnbügel 5 in der in Figur 2 dargestellten Endlage und der Stift 39 zur Fixierung der Stirnbügel 5 in der in Figur 1 dargestellten Endlage dient.

Die Stifte 34 und 39 sind hierbei in die Bohrungen 19 bzw. 21 der Verbinder 4 derart gefügt, dass diese axial fixiert sind, und wie in Figur 10 und 11 dargestellt in den durch die Schenkel 22 des Verbinders 4 gebildeten Raum hineinragen.

Figur 10 und 11 zeigen eine erste Ausführungsvariante der Fixiervorrichtung 31 in der in Figur 2 dargestellten fixierten Endlage der Stirnbügel 5, wobei die Fixierung wie in Figur 12 erkennbar dadurch erfolgt, dass der Stift 34 in die Bohrung 32 des Stirnbügels 5 ragt. Infolge der Lagerhülse 42 und des Stifts 34 ist der Stirnbügel 5 in seiner Lage fixiert.

Der durch die Schenkel 22 der Verbinders 4 gebildeten Raum ist so groß gewählt, dass der Stirnbügel 5 eine Bewegung in der in Figur 10 mit Y gekennzeichnet Richtung durchführen kann. Die in Figur 10, 11 und 12 dargestellte Druckfeder 35 ist in einer Federführung 36 geführt, wobei sich das eine Ende der Druckfeder 35 am Boden 40 der Federführung 36 abstützt. Die Federführung 36 ist in einer Bohrung des Stirnbügels 5 aufgenommen. Die Federführung 36 stützt sich ihrerseits mit dem Bund 41 am Stirnbügel 5 ab. Das gegenüberliegende Ende der Druckfeder 35 stützt sich über die Gleithülse 37 am Verbinder 4 ab. Hierdurch erzeugt die Druckfeder 35 eine Kraft auf den Stirnbügel 5 entgegen der in Figur 10 mit Y gekennzeichnet Richtung, so dass der Stirnbügel 5, wie in Figur 10 und 11 dargestellt, an den jeweils rechten Schenkel 22 der Verbindern 4 gedrückt wird. In dieser Position ist der Formschluss zwischen Stirnbügel 5 und Verbinder 4 vorhanden.

In der dargestellten ersten Ausführungsform (siehe Figur 10) sind auf beiden Seiten der Stirnbügel 5 jeweils eine Druckfeder 35 sowie eine Federführung 36 und eine Gleithülse 37 dargestellt. Es ist jedoch auch denkbar die erforderliche Vorspannkraft mit einer oder auch mehreren Federn zu erzeugen.

Um den Stirnbügel 5 zu entriegeln wird der Stirnbügel 5 entgegen der Vorspannkraft der Druckfeder(n) 35 in die in Figur 10 mit Y gekennzeichnet Richtung verschoben. Dabei bewegt sich der Stirnbügel auf der Lagerhülse 42, so dass der Stift 34 bei ausreichend großem Verfahrweg nicht mehr in die Bohrung 32 des Stirnbügels 5 ragt, wodurch der Stirnbügel 5 auf dem Lagerhülse 42 verdrehbar ist.

Der Stirnbügel 5 kann in dieser axialen Position von der in Figur 2 dargestellten Endlage in die in Figur 1 dargestellte Endlage durch Verdrehen auf dem Lagerhülse 42 überführt werden, wobei die Gleithülse 37 die Reibung zwischen Druckfeder 35 und Verbinder 4 reduziert und somit die zum Verdrehen des Stirnbügel 5 erforderliche Kraft, und den Verschleiß an den Verbinder 4 und der Druckfeder 35 verringert.

Wird in der in Figur 1 dargestellten Endlage der Stirnbügel in Richtung der Federkraft, also entgegen der in Figur 10 mit Y gekennzeichnet Richtung bewegt, taucht der in Figur 13 dargestellte Stift 39 in die Bohrung 32 des Stirnbügels 5 ein, wodurch der Stirnbügel 5 in der in Figur 1 dargestellten Endlage fixiert ist. Gleichzeitig wird durch die Kraft der Druckfeder 35 verhindert, dass der Stirnbügel 5 eine selbstständige Bewegung in die in Figur 10 mit Y gekennzeichnete Richtung durchführen kann und sich somit selbstständig entriegelt.

### Variante 2

Figur 14 zeigt eine zweite Ausführungsvariante der Fixiervorrichtung 31 deren Funktion darin besteht, die Stirnbügel 5 in den in Figur 1 und 2 dargestellten Endpositionen zu fixieren.

Wie in Figur 14 erkennbar, sind die Stirnbügel 5 gelenkig mit den Verbindern 4 verbunden, so dass sie relativ zu den Verbindern 4 verdrehbar sind. Die Stirnbügel 5 sind mit Hilfe der im Folgenden erläuterten Fixiervorrichtung 31 fixierbar. Ein Verdrehen der Stirnbügel 5 relativ der Verbindern 4 kann nur erfolgen, wenn die Fixierung gelöst wird. Kurz gesagt: Der wesentliche Unterschied zur ersten Variante besteht darin, dass eine Hülse 43 in dem Stirnbügel 5 geführt ist, welcher gemeinsam mit dem Stirnbügel 5 entlang der Lagerhülse 42 verschiebbar ist. In dem Verbinder 4 sind Bohrungen 21 vorgesehen, in welche die Hülse 43 einrastet, um einen Formschluss herzustellen.

Der Stirnbügel 5 wird über die Lagerhülse 42 mit den Verbindern 4 derart verbunden, dass der Stirnbügel eine Drehbewegung um die Lagerhülse 42 durchführen kann, wobei der Lagerhülse 42 durch die Bohrung 18 der Verbindern 4 und durch die Bohrung 38 der Stirnbügel 5 gefügt wird und mit der Schraube 33 gesichert wird. Die Sicherung des Lagerhülse 42 kann beispielsweise auch mit Hilfe eines Sicherungsrings erfolgen. Ebenso ist eine drehbare Verbindung der Stirnbügel 5 mit den Verbindern 4 in einer anderen geeigneten Weise beispielsweise durch Vernieten denkbar.

Die Stirnbügel 5 sind derart angeordnet, dass sie zwischen den beiden Schenkeln 22 des Verbinders 4 liegen.

Figur 14, 15 und 16 zeigen eine zweite Ausführungsvariante der Fixiervorrichtung 31 in der in Figur 2 dargestellten fixierten Endlage der Stirnbügel 5, wobei die Fixierung wie in Figur 14 und 15 erkennbar dadurch erfolgt, dass die Hülse 43 in die Bohrung 19 der Verbinder 4 ragt. Infolge der Lagerhülse 42 und der Hülse 43 ist der Stirnbügel 5 in seiner Lage fixiert.

Der durch die Schenkel 22 des Verbinders 4 gebildeten Raum (lichte Weite) ist so groß gewählt, dass der Stirnbügel 5 eine Bewegung in der in Figur 14 durch den Pfeil "Y" gekennzeichnet Richtung durchführen kann.

Die in Figur 14 und 15 dargestellte Druckfeder 44 ist in der, in einer Bohrung einer Hülse 43 geführt. Die Hülse 43 ist in einer Bohrung des Stirnbügels 5 aufgenommen. Ein Ende der Druckfeder 44 stützt sich am Boden 46 der Hülse 43 ab, Die Hülse 43 stützt sich ihrerseits mit dem Bund 47 am Stirnbügel 5 ab. Das gegenüberliegende Ende der Druckfeder 44 stützt sich über die in den Hülse 43 geführte Gleithülse 45 am Verbinder 4 ab. Hierdurch erzeugt die Druckfeder 44 eine Kraft auf den Stirnbügel 5 entgegen der in Figur 14 mit Y gekennzeichnet Richtung, so dass der Stirnbügel 5, wie in Figur 14 und 15 dargestellt, an den jeweils rechten Schenkel 22 der Verbindern 4 gedrückt wird.

In der dargestellten Ausführungsvariante sind auf beiden Seiten der Stirnbügel 5 jeweils eine Druckfeder 44 sowie einer Hülse 43 und einer Gleithülse 45 dargestellt. Es ist jedoch auch denkbar die erforderliche Vorspannkraft mit einer oder auch mehreren Federn zu erzeugen.

Um den Stirnbügel 5 zu entriegeln wird der Stirnbügel 5 entgegen der Vorspannkraft der Druckfeder 44 in die in Figur 14 mit Y gekennzeichnet Richtung verschoben. Dabei bewegt sich der Stirnbügel auf dem Lagerhülse 42, so dass die Hülse 43 bei ausreichend großem Verfahrweg nicht mehr in die Bohrung 21 des Verbinder 4 ragt, wodurch der Stirnbügel 5 auf dem Lagerhülse 42 verdrehbar ist.

Der Stirnbügel 5 kann in dieser axialen Position von der in Figur 2 dargestellten Endlage in die in Figur 1 dargestellte Endlage durch Verdrehen auf der Lagerhülse 42 überführt werden, wobei die Gleithülse 45 die Reibung zwischen Druckfeder 44 und Verbinder 4 reduziert und somit die zum Verdrehen des Stirnbügels 5 erforderliche Kraft und den Verschleiß an dem Verbinder 4 und der Druckfeder 44 verringert.

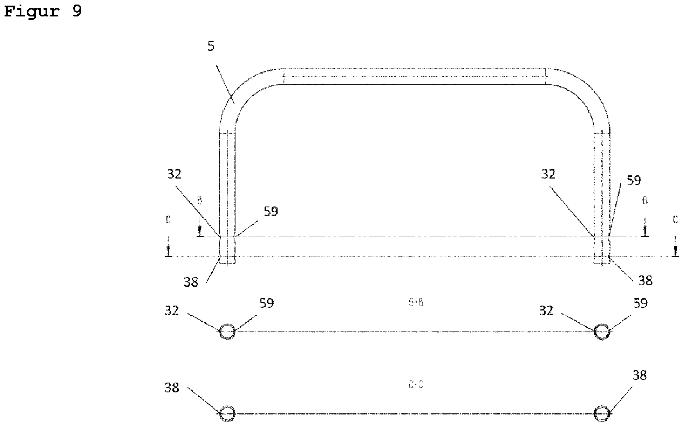

Wird in der in Figur 1 dargestellten Endlage der Stirnbügel in Richtung der Federkraft, also entgegen der in Figur 14 mit "Y" gekennzeichneten Richtung bewegt, taucht die in Figur 16 dargestellte Hülse 43 in die Bohrung 21 des Verbinder 4 ein, wodurch der Stirnbügel 5 in der in Figur 1 dargestellten Endlage fixiert ist. Gleichzeitig wird durch die Kraft der Druckfeder 44 verhindert, dass der Stirnbügel 5 eine selbstständige Bewegung in die in Figur 9 mit "Y" gekennzeichnete Richtung durchführen kann und sich somit selbstständig entriegelt.

Das Entriegeln und Schwenken des Stirnbügels 5 ist sehr einfach, es erfordert kein Werkzeug und kann sogar mit Handschuhen ohne Weiteres ausgeführt werden.

## Patentansprüche

1. Fahrradanhänger umfassend zwei Längsträger (2) und einen Boden (3), zwei Räder (10) und eine Deichsel (8), **dadurch gekennzeichnet, dass** ein Stirnbügel (5) an den Längsträgern (2) drehbar mittels zweier Gelenke gelagert ist, dass mindestens eines der Gelenke einen Verbinder (4) mit zwei zueinander beabstandeten Schenkeln (22), eine Lagerhülse (42) und eine Fixiervorrichtung (31) umfasst, wobei die Fixiervorrichtung (31) die formschlüssige Arretierung des Stirnbügels (5) in mindestens zwei Positionen relativ zu dem Verbinder (4) ermöglicht, wobei der Stirnbügel (5) mittels der Lagerhülse (42) drehbar an dem Verbinder (4) gelagert ist, und wobei eine lichte Weite zwischen den Schenkeln (22) größer ist als die Außenabmessung des Stirnbügels (5), so dass der Stirnbügel (5) auf der Lagerhülse (42) zwischen den Schenkeln (22) verschiebbar ist.

2. Fahrradanhänger nach Anspruch 1, **dadurch gekennzeichnet, dass** in dem Verbinder (4) des Gelenks mehrere Stifte (34, 39) angeordnet sind, dass diese Stifte (34, 39) in den Raum zwischen den Schenkeln (22) ragen, dass in dem Stirnbügel (5) eine Bohrung (32) vorhanden ist, und dass die formschlüssige Arretierung des Stirnbügels (5) hergestellt wird, indem einer der Stifte (34, 39) in die Bohrung (32) eintaucht.

3. Fahrradanhänger nach Anspruch 1, **dadurch gekennzeichnet, dass** in dem Verbinder (4) des Gelenks mehrere Bohrungen (19, 21) ausgebildet sind, dass in dem Stirnbügel (5) eine Hülse (43) vorhanden ist, deren eines Ende über den Stirnbügel (5) hinausragt, und dass die formschlüssige Arretierung des Stirnbügels (5) hergestellt wird, indem das über den Stirnbügel (5) hinausragende Ende der Hülse (43) in eine der Bohrungen (19, 21) des Verbinders (4) eintaucht.

4. Fahrradanhänger nach einem der vorhergehenden Ansprüche, **dadurch gekennzeichnet, dass** das Gelenk Federmittel umfasst, deren Federkraft den Stirnbügel (5) auf der Lagerhülse (42) in Richtung des Schenkels (22) drückt, an dem die Stifte (34, 39) befestigt sind oder in dem die Bohrungen (19, 21) ausgebildet sind.

5. Fahrradanhänger nach Anspruch 4, **dadurch gekennzeichnet, dass** die Federmittel eine Druckfeder (35), eine Federführung (36) und eine Gleithülse (37) umfassen, und dass sich die Druckfeder (35) mit einem Ende gegen die Federführung (36) und mit dem anderen Ende gegen die Gleithülse (37) abstützt.

6. Fahrradanhänger nach Anspruch 5, **dadurch gekennzeichnet, dass** die Federführung (36) in dem Stirnbügel (5) aufgenommen ist, und dass sich die Gleithülse (37) gegen einen Schenkel (22) des Verbinders abstützt.

7. Fahrradanhänger nach Anspruch 5 oder 6 in Verbindung mit Anspruch 3, **dadurch gekennzeichnet, dass** sich die Druckfeder (35) mit einem Ende gegen die Hülse (43) und mit dem anderen Ende die Gleithülse (37) abstützt.

8. Fahrradanhänger nach einem der Ansprüche 4 bis 7, **dadurch gekennzeichnet, dass** auf der Lagerhülse (42) eine Druckfeder angeordnet ist.

9. Fahrradanhänger (1) nach einem der vorhergehenden Ansprüpche, **dadurch gekennzeichnet, dass** beide Gelenke nach einem der Ansprüche 1 bis 8 ausgebildet sind.

10. Fahrradanhänger (1) nach einem der vorhergehenden Ansprüche, **dadurch gekennzeichnet, dass** der Stirnbügel (5) als U-förmiger Rohrbogen ausgebildet ist.

11. Fahrradanhänger (1) nach einem der vorhergehenden Ansprüche, **dadurch gekennzeichnet, dass** der Stirnbügel (5) eine Stirnwand umfasst.

12. Fahrradanhänger (1) nach einem der vorhergehenden Ansprüche, **dadurch gekennzeichnet, dass** die Deichsel (8) in verschiedenen Positionen an dem Fahrrandhänger (1) anbringbar ist.

## Claims

1. Bicycle trailer comprising two side supports (2) and a floor (3), two wheels (10), and a drawbar (8), **characterized in that** an end bracket (5) is mounted on the side supports (2) so as to be rotatable by means of two joints, **in that** at least one of the joints comprises a connector (4) having two legs (22) spaced apart from one another, a bearing sleeve (42) and a fixing device (31), the fixing device (31) allowing positive locking of the end bracket (5) in at least two positions relative to the connector (4), the end bracket (5) being mounted on the connector (4) by means of the bearing sleeve (42) so as to be rotatable, and a clear width between the legs (22) being greater than the outer dimension of the end bracket (5), so that the end bracket (5) is displaceable on the bearing sleeve (42) between the legs (22).

2. Bicycle trailer according to claim 1, **characterized in that** a plurality of pins (34, 39) are arranged in the connector (4) of the joint, **in that** these pins (34, 39) project into the space between the legs (22), **in that** a bore (32) is present in the end bracket (5), **and in that** the positive locking of the end bracket (5) is established by one of the pins (34, 39) being inserted into the bore (32).

3. Bicycle trailer according to claim 1, **characterized in that** a plurality of bores (19, 21) are formed in the connector (4) of the joint, **in that** a sleeve (43) is present in the end bracket (5), one end of which sleeve projects beyond the end bracket (5), **and in that** the positive locking of the end bracket (5) is established by the end of the sleeve (43) that projects beyond the end bracket (5) being inserted into one of the bores (19, 21) of the connector (4).

4. Bicycle trailer according to any of the preceding claims, **characterized in that** the hinge comprises spring means, the spring force of which presses the end bracket (5) on the bearing sleeve (42) in the direction of the leg (22), on which the pins (34, 39) are fastened or in which the bores (19, 21) are formed.

5. Bicycle trailer according to claim 4, **characterized in that** the spring means comprise a compression spring (35), a spring guide (36), and a sliding sleeve (37), **and in that** the compression spring (35) is supported with one end against the spring guide (36) and with the other end against the sliding sleeve (37).

6. Bicycle trailer according to claim 5, **characterized in that** the spring guide (36) is received in the end bracket (5), **and in that** the sliding sleeve (37) is supported against a leg (22) of the connector.

7. Bicycle trailer according to claim 5 or 6 in conjunction with claim 3, **characterized in that** the compression spring (35) is supported with one end against the sleeve (43) and with the other end the sliding sleeve (37).

8. Bicycle trailer according to any of claims 4 to 7, **characterized in that** a compression spring is arranged on the bearing sleeve (42).

9. Bicycle trailer (1) according to any of the preceding claims,
**characterized in that** both joints are designed according to any of claims 1 to 8.

10. Bicycle trailer (1) according to any of the preceding claims,
**characterized in that** the end bracket (5) is in the form of a U-shaped pipe bend.

11. Bicycle trailer (1) according to any of the preceding claims,
**characterized in that** the end bracket (5) comprises an end wall.

12. Bicycle trailer (1) according to any of the preceding claims,
**characterized in that** the drawbar (8) can be attached to the bicycle trailer (1) in various positions.

## Revendications

1. Remorque de bicyclette comprenant deux longerons (2) et un fond (3), deux roues (10) et un timon (8), **caractérisée en ce qu'**un étrier frontal (5) est monté de manière rotative sur les longerons (2) au moyen de deux articulations, qu'au moins une des articulations comprend un connecteur (4) avec deux branches (22) espacées l'une de l'autre, une douille de palier (42) et un dispositif de fixation (31), dans laquelle le dispositif de fixation (31) permet le blocage par coopération de formes de l'étrier frontal (5) dans au moins deux positions par rapport au connecteur (4), dans laquelle l'étrier frontal (5) est monté de manière rotative sur le connecteur (4) au moyen de la douille de palier (42), et dans laquelle un diamètre intérieur entre les branches (22) est supérieur à la dimension extérieure de l'étrier frontal (5), de sorte que l'étrier frontal (5) peut coulisser sur la douille de palier (42) entre les branches (22).

2. Remorque de bicyclette selon la revendication 1, **caractérisée en ce que** plusieurs tiges (34, 39) sont disposées dans le connecteur (4) de la branche, que ces tiges (34, 39) font saillie dans l'espace entre les branches (22), qu'un trou (32) est présent dans l'étrier frontal (5), et que le blocage par coopération de formes de l'étrier frontal (5) est établi du fait qu'une des tiges (34, 39) s'enfonce dans le trou (32).

3. Remorque de bicyclette selon la revendication 1, **caractérisée en ce que** plusieurs trous (19, 21) sont réalisés dans le connecteur (4) de la branche, qu'une douille (43), dont une extrémité fait saillie de l'étrier frontal (5), est présente dans l'étrier frontal (5), et que le blocage par coopération de formes de l'étrier frontal (5) est établi du fait que l'extrémité de la douille (43) faisant saillie de l'étrier frontal (5) s'enfonce dans un des trous (19, 21) du connecteur (4).

4. Remorque de bicyclette selon l'une quelconque des revendications précédentes, **caractérisée en ce que** la branche comprend des moyens formant ressort, dont la force élastique presse l'étrier frontal (5) sur la douille de palier (42) en direction de la branche (22), sur laquelle les tiges (34, 39) sont fixées ou dans laquelle les trous (19, 21) sont réalisés.

5. Remorque de bicyclette selon la revendication 4, **caractérisée en ce que** les moyens formant ressort comprennent un ressort de compression (35), un guidage de ressort (36) et une douille coulissante (37), et que le ressort de compression (35) s'appuie avec une extrémité contre le guidage de ressort (36) et avec l'autre extrémité contre la douille coulissante (37) .

6. Remorque de bicyclette selon la revendication 5, **caractérisée en ce que** le guidage de ressort (36) est logé dans l'étrier frontal (5), et que la douille coulissante (37) s'appuie contre une branche (22) du connecteur.

7. Remorque de bicyclette selon la revendication 5 ou 6 en liaison avec la revendication 3, **caractérisée en ce que** le ressort de compression (35) s'appuie avec une extrémité contre la douille (43) et avec l'autre extrémité la douille coulissante (37).

8. Remorque de bicyclette selon l'une quelconque des revendications 4 à 7, **caractérisée en ce qu'**un ressort de compression est disposé sur la douille de palier (42).

9. Remorque de bicyclette (1) selon l'une quelconque des revendications précédentes, **caractérisée en ce que** les deux articulations sont réalisées selon l'une quelconque des revendications 1 à 8.

10. Remorque de bicyclette (1) selon l'une quelconque des revendications précédentes, **caractérisée en ce que** l'étrier frontal (5) est réalisé sous la forme d'un coude tubulaire en forme de U.

11. Remorque de bicyclette (1) selon l'une quelconque des revendications précédentes, **caractérisée en ce que** l'étrier frontal (5) comprend une paroi frontale.

12. Remorque de bicyclette (1) selon l'une quelconque des revendications précédentes, **caractérisée en ce que** le timon (8) peut être fixé dans différentes positions sur la remorque de bicyclette (1).
